# EUROPEAN PATENT SPECIFICATION

(11) **EP 1 048 536 B1**
(45) Date of publication and mention of the grant of the patent: **09.02.2005**
(21) Application number: 00303424.6
(22) Date of filing: 25.04.2000
(51) Int. Cl.: B60R 22/405, B60R 22/40

(54) **A seat belt retractor**
Sicherheitsgurt- Retraktor
Rétracteur pour ceinture de sécurité

(30) Priority: 21.04.1999 GB 9908976; 20.04.2000 GB 0009774
(43) Date of publication of application: 02.11.2000
(73) Proprietor: KEY SAFETY SYSTEMS, INC., Sterling Heights, Michigan 48314 (US)
(72) Inventor: Hodgson, John, Carlisle, Cumbria (GB); Jallot, Frederic, Carlisle, Cumbria CA1 1BF (GB); Slack, Paul, Carlisle, Cumbria CA4 8LU (GB)
(74) Representative: Croston, David

(56) References cited:
- GB-A- 1 528 184
- GB-A- 2 328 184
- US-A- 3 990 651

## Description

The invention relates to a seat belt retractor.

A retractor for a vehicle seat belt contains a vehicle sensor, which responds to changes in the vehicle acceleration or deceleration occurring in a vehicle crash. There are usually two sensor inertial mechanisms within the retractor. The webbing sensor detects payout of the webbing from the retractor due to the movement of a vehicle occupant when the vehicle decreases or increases in speed. The vehicle sensor comprises an inertia mass either in the form of a ball or a hollow shaped tube acting on a pin or a mass with a relatively high centre of gravity located above a narrow base. Movement of the mass acts on a lever positioned in close proximity to the mass to move a toothed portion of the lever into engagement with teeth on a spool or a ratchet thus initiating the locking of the retractor spool and preventing further payout of the webbing.

A typical retractor, including the vehicle sensor, is formed by many cooperating components. One of the problems associated with prior art retractors is that each component can vary in size due to environmental changes such as changes in temperature during the component manufacturing process. For example, components vary in dimensions when made in multi cavity tools where more than one component is moulded in sequence or at the same time. Also, after large volumes of components have been manufactured in a tool, the moulding tool may deteriorate or wear causing variation in component sizes. The variation in sizes creates variability in the relationship between each component. This is particularly undesirable in the vehicle sensor as the spacing between the spool teeth and the vehicle sensor locking teeth requires precision. Variation in the gap between the spool or ratchet teeth and the vehicle sensor locking tooth gives poor repeatability of the vehicle sensor performance. The space between the spool or ratchet teeth and the vehicle sensor locking tooth is called the "tip gap".

If the tip gap is too narrow the vehicle sensor lever may engage with the spool teeth and lock the retractor in a non-emergency situation. That can create discomfort for the occupant with the seat belt "jamming".

Also, if the various retractor components have changed in size, thus creating a varying "tip gap" and if the vehicle is positioned at an angle the vehicle occupant may not be able to remove the webbing from the retractor rendering the seat belt unusable or creating a very sensitive belt which acknowledges and locks the retractor under non-emergency situations.

It is required that all retractors lock within specific pay out of webbing under certain vehicle acceleration and declaration conditions. With wide variations in component sizes the retractor locking times will vary and therefore different amounts of webbing will be released from the retractor. Such variations result in poor performance and efficiency of the seat belt. The higher the variation in the vehicle sensor performance, the higher the likelihood of experiencing high payout of webbing which will not provide the most effective protection to the vehicle occupant during an accident.

British Patent No.1528184 relates to a safety belt reel with adjustable locking mechanism. A ball 5 is received in a dished support 4. The support 4 can be moved along an arcuate track concentric with the reel so as to alter the angular inclination of the support. In that way, the "sensitivity" of the mechanism can be adjusted. The support 4 can also be tilted in a plane transverse to the arcuate track.

British patent application No.2328184 relates to a vehicle sensor in a safety restraint belt retractor. In GB2328184, the mass 3 has an upstanding finger 9 which engages in a depression on the underside of pawl 5. The finger 9 acts as a fulcrum so that up and down movement of the pivot point of the pawl causes the pawl to tip about the fulcrum so as to alter the tooth gap between ratchet and pawl.

It is an object of the invention to provide an improved seat belt retractor.

According to a first aspect of the invention there is provided a seat belt retractor comprising a frame, a spool rotatably mounted to the frame, a spool locking device for locking the spool to prevent rotation thereof, actuating means for actuating the spool locking device comprising a support being mounted for rotation about an axis, the support carrying a mass and a pawl, the mass being arranged to move from an initial position to an actuating position to actuate the pawl into engagement with a ratchet on the spool whereby engagement of the pawl with the ratchet actuates the spool locking device, characterised in that the pawl is arranged off-set from the axis whereby rotation of the support about the axis effects movement of the pawl so as to adjust the distance between the pawl and the ratchet.

In that way the position of the pawl can be adjusted to provide an optimum gap between the pawl tip and the ratchet on the spool.

The support preferably comprises a base having a recess and two end walls upstanding from opposite edges of the base, the mass being received in the recess and the pawl being arranged over the mass, pivotally mounted to an upper part of one end wall.

In such a case the support preferably includes respective pivot members extending from each end wall to enable the support to be pivotally mounted to the frame.

According to a second aspect of the invention there is provided a seat belt retractor comprising a frame, a spool rotatably mounted to the frame, a spool locking device for locking the spool to prevent rotation thereof, actuating means for actuating the spool locking device comprising a support carrying a mass and a pawl, the mass being arranged to move from an initial position to an actuating position to actuate the pawl into engagement with a ratchet on the spool whereby engagement of the pawl with the ratchet actuates the spool locking device, characterised in that the spool has a cam formation with a circular cam periphery arranged substantially coaxially therewith, the support having a cam follower, the support being mounted movably relative to the spool in response to movement of the cam follower.

In that way the position of the pawl tip relative to the ratchet can continually be adjusted in response to, for example, irregularities in the concentricity of the spool.

Preferably, the support is pivotably mounted to the frame so that movement of the cam follower causes the support to pivot so as to effect automatic tip gap adjustment.

According to a third aspect of the invention, there is provided a seat belt retractor comprising a frame, a spool rotably mounted to the frame, a spool locking device for locking the spool to prevent rotation thereof, actuating means for actuating the spool locking device comprising a support carrying a mass and a pawl, the mass being arranged to move from an initial position to an actuating position to actuate the pawl into engagement with a ratchet on the spool whereby engagement of the pawl with the ratchet actuates the spool locking device, characterised in that the actuating means comprises a pawl actuating lever pivotally mounted to the support and arranged between the mass and the pawl, the pawl including a cam surface, whereby moving the pawl actuating lever along the cam surface adjusts the distance between the pawl (16) and the ratchet.

In a preferred embodiment of the third aspect, the movement of the pawl actuating lever along the cam surface is effected by means of a movement mechanism comprising a pivot pin which pivotally mounts the pawl actuating lever and pivot peg extending from the pivot pin, parallel with and offset from the axis thereof, and received in the support, whereby rotation of the pivot peg effects movement of the pawl actuating lever along the cam surface.

Seat belt retractors in accordance with the invention will now be described in detail, by way of example, with reference to the accompany drawings, in which;
Fig. 1 is a perspective view of a vehicle sensor for use in a seat belt retractor in accordance with the invention,
Fig. 2 is an end elevation of the vehicle sensor of Fig. 1,
Fig. 3 is a side elevation of a vehicle sensor for use in a retractor in accordance with the second aspect of the invention arranged beneath a ratchet of a retractor spool,
Fig. 4 is an end elevation of the arrangement of Fig.3,
Fig. 5 is a perspective view of part of the arrangement of Figs. 3 and 4,
Fig.6 is a side elevation of a vehicle sensor for use in a retractor spool in accordance with the second and third aspects of the invention.
Fig. 7 is a side elevation of a vehicle sensor for use in a retractor in accordance with the first, second and third aspects of the invention.
Fig. 8 is a diagrammatic side elevation of a pawl and pawl actuating lever of a vehicle sensor in a retractor in accordance with the third aspect of the invention showing the method of adjusting the pawl,

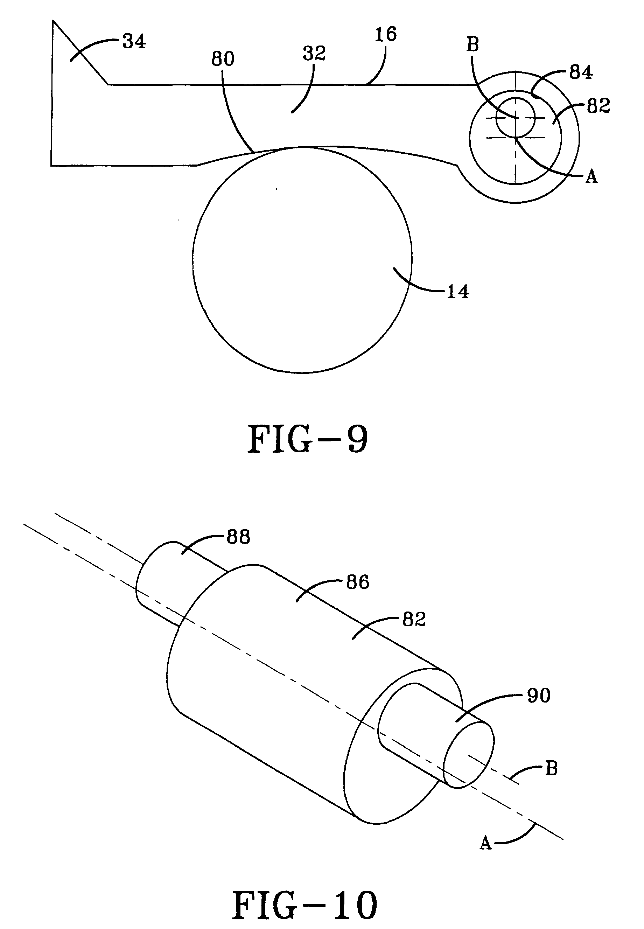

Fig. 9 is a side elevation of part of the vehicle sensor for use in the seat belt retractor not in accordance with the present invention, and
Fig. 10 is a perspective view of the pawl adjusting mechanism of the sensor of Fig.9.

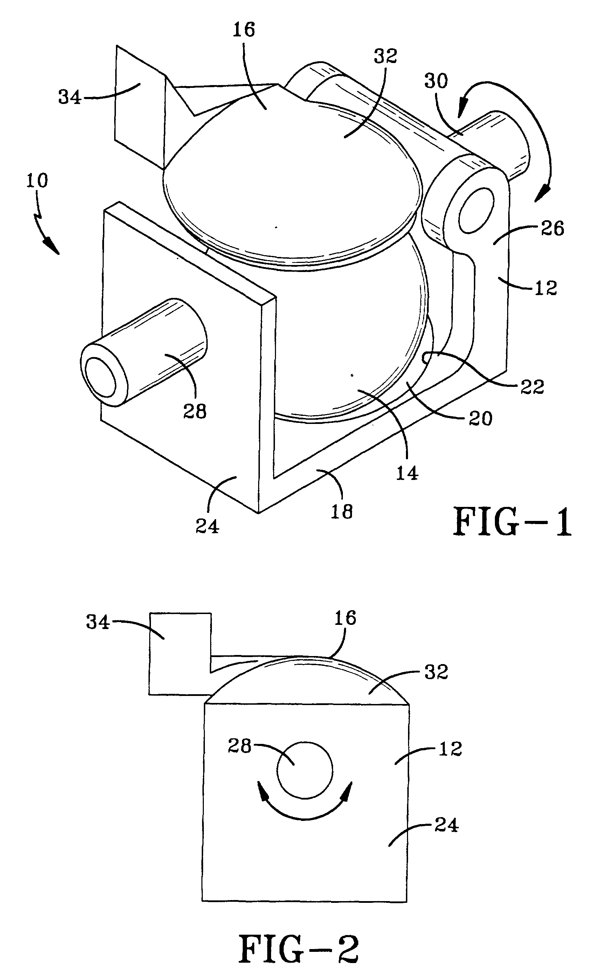

In Fig. 1 a vehicle sensor 10 for use in a seat belt retractor (not shown) comprises a support 12, a spherical inertial mass 14 arranged on the support 12 and a pawl 16 pivotally mounted to the support 12 and arranged above the mass 14.

The support 12 comprises a base 18 having a substantially circular recess 20 formed therein with sloping side walls 22. The support 12 further comprises end walls 24, 26 which are arranged upstanding from opposite ends of the base 18.

A spigot 28 extends perpendicularly outwardly from the end wall 24, from the face of the end wall facing away from the other end wall. A spigot 30 extends perpendicularly outwardly from the end wall 26 from the face of the end wall 26 facing away from the other end wall 24. The spigots 28, 30 are arranged co-axially with respect to each other.

The inertial mass 14 is arranged in the recess 20.

The pawl 16 is pivotally mounted to the upper part of the end wall 26 of the support 12. The pawl 16 comprises a curved cap 32 and a pawl tooth 34 arranged at one side of the cap 32.

The cap 32 is arranged over the spherical mass 14 so as to cover part of the mass 14 and the tooth 34 extends upwardly from said one side of the cap 32 towards a ratchet on a retractor spool (not shown). The function of the vehicle sensor is described in detail above and will not be gone into here. As mentioned above, it is necessary to adjust the gap between the tip of the pawl tooth 34 and the teeth of the ratchet (not shown) after assembly of the sensor into the retractor spool. In the present embodiment the support 12 of the vehicle sensor 10 is pivotally mounted to the retractor by means of the spigots 28, 30. As the pawl tooth 34 is arranged off-set from the axis of the spigots 28, 30 rotation of the support about the spigots 28, 30 effects up and down movement of the pawl tooth 34. Accordingly, in the present embodiment when the support 12 of the vehicle sensor 10 is arranged in position on the retractor the support can be pivoted about the axis of the spigots 28, 30 in order to effect adjustment of the gap between the pawl tooth 34 and the teeth of the ratchet (not shown).

Preferably the spigots 28, 30 are received with an interference fit in a retractor so that, once adjusted, the support 12 does not return to its initial position by means of, for example, vibration of the vehicle in which the retractor is located. Alternatively, the surface of one or more of the spigots 28, 30 may be crenellated and a tang may be provided in the recess in which the spigot is received in the retractor so that a positive engagement is effected to prevent the support 12 from moving out of position.

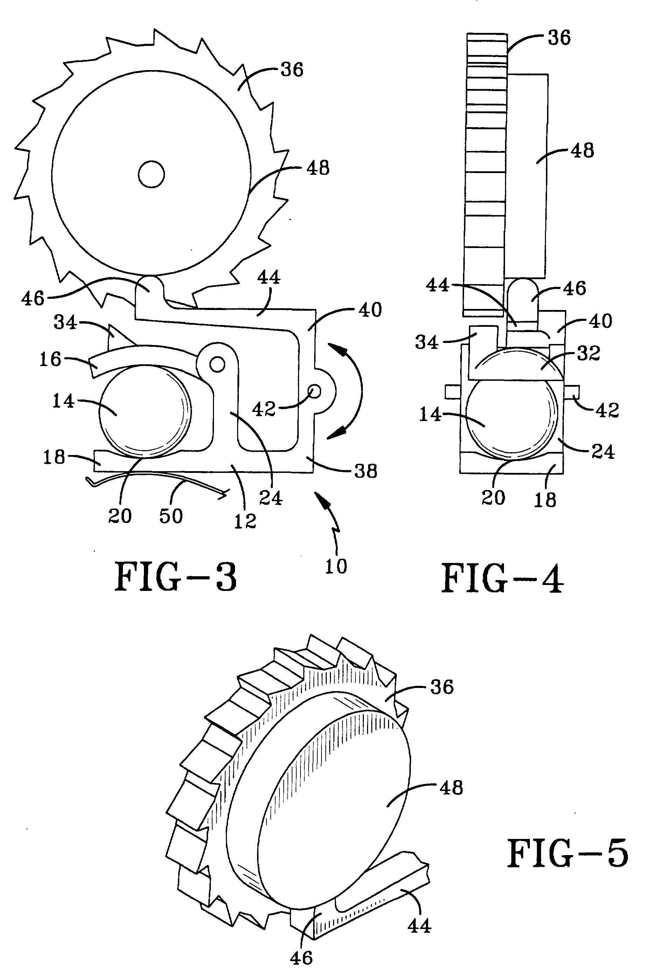

In Fig. 3, an alternative arrangement of seat belt retractor in accordance with the first and second aspect of the invention is shown.

In Fig. 3, the vehicle sensor 10 is arranged in a retractor (not shown) adjacent a ratchet 36 of the retractor. Parts corresponding to parts in Figs. 1 and 2 carry the same reference numerals. The sensor 10 comprises a support 12, an inertial mass 14 and a pawl 16. The support 12 is similar to that shown in Fig. 1 except the end wall 24 is omitted, as are the mounting spigots 28, 30. Instead, the support 12 includes an extending base part 38 extending from the end wall 24 in a direction away from the inertia mass 14. The extended base part 38 has an upstanding member 40 which is pivotally mounted at pivot point 42 to the retractor. The upstanding member 40 has a cam follower member 44 extending from an upper part thereof. The cam follower 44 includes a cam follower finger 46 projecting transversely from one end thereof towards a circular cam surface 48 arranged on the ratchet 36. The cam surface 48 is arranged co-axially of the ratchet 36.

A leaf spring 50 is arranged beneath the support 12 engaging the underside of the base 18 so as to bias the support 12 towards the ratchet 36.

In the embodiment of Figs. 3 to 5 the support 12 is adjusted initially on assembly by rotating the support 12 about the pivot point 42 so as to correct the gap between the tip of the pawl tooth 34 and the teeth of the ratchet 36. During operation of the retractor, errors in the concentricity of the axis of the ratchet 36 may produce variations in the gap between the pawl tooth 34 and the teeth of the ratchet 36. In the present embodiment that gap is corrected automatically by means of the cam follower 44. The finger 46 of the cam follower 44 follows the circular cam surface 48 which is arranged co-axially of the ratchet 36. Thus, any vertical movement of the ratchet 36, due to manufacturing errors for example, will result in a corresponding movement of the support 12 about the axis 42. If the ratchet 36 moves upwardly in Fig. 3 the leaf spring 50 will bias the support 12 upwardly by corresponding distance. If the ratchet 36 moves downwardly the cam surface 48 will act against the cam follower 44 so as to push the support 12 downwardly against the bias of the spring 50.

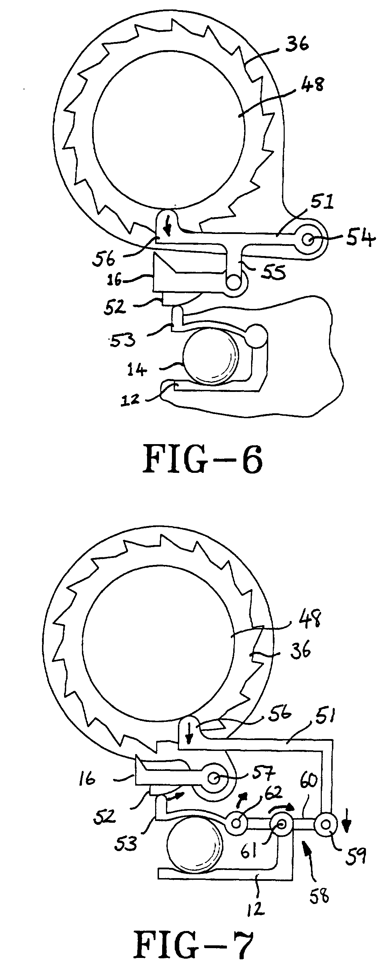

In Fig.6 a further pawl/pawl actuation arrangement is shown. In Fig.6, the pawl 16 is carried by a pawl adjustment lever 51. The pawl 16 has a cam surface 52 formed thereon on the underside thereof. The pawl 16 is actuated by means of a pawl actuating lever 53 which itself is arranged over the inertial mass 14 on the support 12.

The pawl adjustment lever 51 is pivoted on the frame of the retractor spool at pivot point 54. The pawl adjustment lever 51 carries the pawl 16 from a depending spur 55. The pawl is pivotally mounted to the spur 55. The pawl adjustment lever 51 further comprises a cam follower part 56 similar to the cam follower shown in Fig.3. As in Fig.3, the cam follower part 56 follows the circular cam surface 48 arranged co-axially of the ratchet 36. In use, as the ratchet rotates the cam follower 56 follows the circular cam surface 48 so that any vertical movement of the ratchet 36 due to manufacturing errors will result in a corresponding movement of the cam follower 56. That causes the pawl adjustment lever 51 to move up and down about pivot point 54 which, in turn, moves the spur 55 up and down so that the pawl 16 is caused to pivot about its pivotal mounting due to the up and down movement thereof. The movement of the pawl 16 changes the point on the cam surface 52 that the pawl actuating lever 53 engages with the pawl. Since the cam surface 52 is curved, relative movement of the pawl actuating lever 53 along that cam surface will effect a change in the distance between the pawl tooth and the tooth of the ratchet 36.

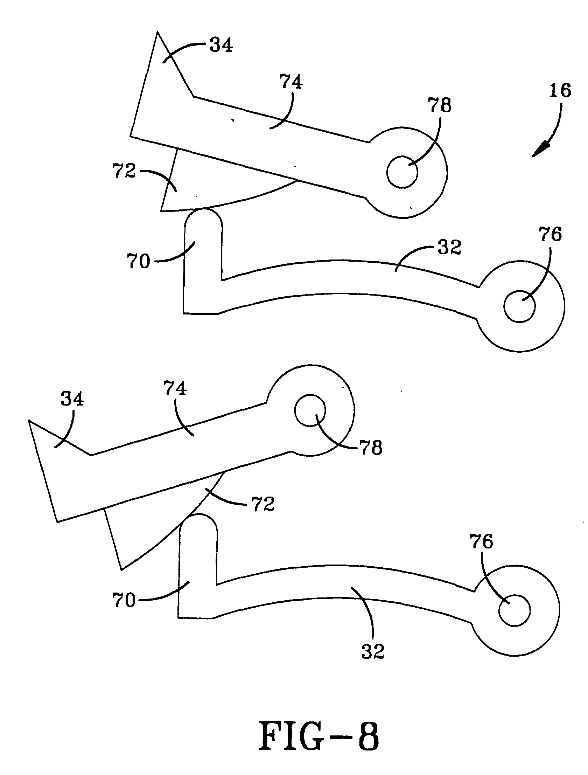

Fig.7 is similar in many respects to the arrangement shown in Fig.6. However, the mechanism is less direct in its action. In Fig.7 the pawl 16 is carried by the frame of the ratchet 36. Again, the pawl 16 has a cam surface 52 on the underside thereof. The pawl 16 is pivotally mounted to the frame of the ratchet 36 at pivot point 57. A pawl adjustment lever 51 having a cam follower 56 engaging a cam surface 48 on the ratchet 36 is provided. In the Fig.7 embodiment the pawl adjustment lever 51 comprises an L-shaped body having the cam follower 56 at one free end and being pivotally connected to a further lever mechanism generally indicated at 58 at its other end at pivot point 59. The lever mechanism 58 comprises a solid lever member 60 connected via pivot point 59 to the pawl adjustment lever 51 at one end. The lever 60 is mounted on a fulcrum 61 comprising part of the support 12 of the inertia mass 14 and the other end of the lever 60 carries the pawl actuating lever 53 by means of pivotal linkage 62. In use, as illustrated in Fig.7, the cam follower 56 follows the surface 48 on the ratchet 36 to adjust for movement of the ratchet due to manufacturing tolerances etc. For example, a downward movement of the cam follower 56 results in downward movement of the pawl adjustment lever 51 which pushes one end of the lever 60 downwardly. The lever 60 pivots about the fulcrum 61 which in turn lifts the other end of the lever 60 which carries the pawl actuating lever 53. The pawl actuating lever 53 is moved so that the point of engagement of the lever with the cam surface 52 on the underside of the pawl 16 moves. The cam surface is arranged so that downward movement of the cam follower indicating downward movement of the ratchet 36 effects a corresponding downward movement in the pawl 16.

In Fig. 8 the operation of the pawl and pawl actuating lever from the third aspect of the invention is illustrated. In Fig. 8 the pawl 16 is formed in two parts. The cap 32 which extends over the mass 14 has a pawl actuating tip 70 which engages a ramped surface 72 on the underside of a pawl 74. The cap 32 is pivotally mounted at pivot point 76 to the support 12 and the pawl 74 is pivotally mounted at pivot point 78 to the retractor.

The pawl 74 further includes a pawl tooth 34, similar to that shown in previous embodiments.

In use, movement of the inertia mass 14 out of the recess 20 in the base 18 of the support 12 actuates the cap 32 upwardly which, pivots about pivot point 76 and pushes the pawl 74 upwardly by means of the pawl actuating tip 70 so that the pawl tooth 34 can engage with the teeth of the ratchet 36 (not shown). The pawl actuating tip 70 engages the ramped surface 72 on the underside of the pawl 74 so that relative lateral movement between the pawl 74 and the cap 32 alters the initial position of the pawl tooth 34 as shown in Fig. 8. In the upper illustrated arrangement the pawl actuating tip 70 contacts the ramped surface 72 towards the left hand end thereof as shown in Fig. 8. The ramp 72 tapers outwardly from its right hand end to its left hand end so that engaging the pawl tip 70 with the left hand end of the ramp will mean that the pawl tip 34 is pushed upwardly.

If the pawl is moved laterally relative to the cap 32 as shown in the lower illustrated example in Fig. 8 the pawl actuating tip 70 engages the ramped surface 72 towards a right hand end thereof which means that the pawl tip 34 will be moved away from the ratchet 36 and will be arranged lower relative to the ratchet 36 than when the pawl actuating tip 17 engages the left hand end of the ramped surface 72. Thus relative lateral movement between the pawl 74 and the cap 36 will result in adjustment of the initial position of the pawl tooth 34 and thus adjustment of the size of the gap between the tooth 34 and the teeth of the ratchet 36. Although Fig. 8 shows the pawl 74 moving and the cap 36 remaining stationary it will be appreciated that the pawl could be held fixed and the cap moved relative to it. Indeed that latter arrangement is preferred.

Although the above described embodiments illustrate separate aspects of the invention it will be appreciated that two or more of the aspects may be combined in a single sensor in order to provide various means of adjustment of the pawl tooth.

## Claims

1. A seat belt retractor comprising a frame, a spool rotatably mounted to the frame, a spool locking device for locking the spool to prevent rotation thereof, actuating means for actuating the spool locking device comprising a support (12) being mounted for rotation about an axis, the support carrying a mass (14) and a pawl (16), the mass (14) being arranged to move from an initial position to an actuating position to actuate the pawl (16) into engagement with a ratchet (36) on the spool whereby engagement of the pawl (16) with the ratchet (36) actuates the spool locking device, **characterised in that** the pawl (16) is arranged off-set from the axis whereby rotation of the support (14) about the axis effects movement of the pawl (16) so as to adjust the distance between the pawl (16) and the ratchet (36).

2. A seat belt retractor according to claim 1 in which the support (12) preferably comprises a base (18) having a recess (20) and two end walls (24, 26) upstanding from opposite edges of the base, the mass (14) being received in the recess (20) and the pawl (16) being arranged over the mass (14), pivotally mounted to an upper part of one end wall (24, 26).

3. A seat belt retractor according to claim 2 in which the support (12) includes respective pivot members (28, 30) extending from each end wall (24, 26) to enable the support to be pivotally mounted to the frame.

4. A seat belt retractor comprising a frame, a spool rotatably mounted to the frame, a spool locking device for locking the spool to prevent rotation thereof, actuating means for actuating the spool locking device comprising a support (12) carrying a mass (14) and a pawl (16), the mass being arranged to move from an initial position to an actuating position to actuate the pawl (16) into engagement with a ratchet (36) on the spool whereby engagement of the pawl with the ratchet actuates the spool locking device, **characterised in that** the spool has a cam formation (48) with a circular cam periphery arranged substantially coaxially therewith, the support (12) having a cam follower (46), the support (12) being mounted movably relative to the spool in response to movement of the cam follower.

5. A seat belt retractor according to claim 4 in which the support (12) is pivotably mounted to the frame as that movement of the cam follower (46) causes the support to pivot so as to effect automatic tip gap adjustment.

6. A seat belt retractor comprising a frame, a spool rotably mounted to the frame, a spool locking device for locking the spool to prevent rotation thereof, actuating means for actuating the spool locking device comprising a support (12) carrying a mass (14) and a pawl (16), the mass (14) being arranged to move from an initial position to an actuating position to actuate the pawl (16) into engagement with a ratchet (36) on the spool whereby engagement of the pawl (16) with the ratchet (36) actuates the spool locking device, **characterised in that** the actuating means comprises a pawl actuating lever (53) pivotally mounted to the support (12) and arranged between the mass (14) and the pawl (16), the pawl including a cam surface (52), whereby moving the pawl actuating lever (53) along the cam surface adjusts the distance between the pawl (16) and the ratchet (36).

7. A seat belt retractor according to claim 6 in which the movement of the pawl actuating lever (53) along the cam surface (52) is effected by means of a movement mechanism comprising a pivot pin (84) which pivotally mounts the pawl actuating lever (53) and a pivot peg (88) extending from the pivot pin (84), parallel with and offset from the axis thereof, and received in the support, whereby rotation of the pivot peg (88) effects movement of the pawl actuating lever (53) along the cam surface (52).

## Patentansprüche

1. Sicherheitsgurt-Aufrollvorrichtung, die folgendes umfaßt: einen Rahmen, eine drehbar am Rahmen angebrachte Spule, eine Spulenarretiervorrichtung zum Arretieren der Spule, um ein Drehen derselben zu verhindern, Betätigungsmittel zum Betätigen der Spulenarretiervorrichtung, die einen zum Drehen um eine Achse angebrachten Träger (12) umfaßt, wobei der Träger eine Masse (14) und eine Sperrklinke (16) trägt, wobei die Masse (14) angeordnet wird, um sich von einer Anfangsposition zu einer Betätigungsposition zu bewegen, um die Sperrklinke (16) in einen Eingriff mit einem Klinkenrad (36) an der Spule zu bewegen, wodurch der Eingriff der Sperrklinke (16) mit dem Klinkenrad (36) die Spulenarretiervorrichtung betätigt, **dadurch gekennzeichnet, daß** die Sperrklinke (16) versetzt von der Achse angeordnet wird, wodurch ein Drehen des Trägers (12) um die Achse eine Bewegung der Sperrklinke (16) bewirkt, um so die Entfernung zwischen der Sperrklinke (16) und dem Klinkenrad (36) einzustellen.

2. Sicherheitsgurt-Aufrollvorrichtung nach Anspruch 1, bei welcher der Träger (12) vorzugsweise eine Basis (18) umfaßt, die eine Aussparung (20) und zwei von gegenüberliegenden Kanten der Basis hochstehende Stirnwände (24, 26) hat, wobei die Masse (14) in der Aussparung (20) aufgenommen wird und die Sperrklinke (16) über der Masse (14) angeordnet wird, schwenkbar angebracht an einem oberen Teil der einen Stirnwand (24, 26).

3. Sicherheitsgurt-Aufrollvorrichtung nach Anspruch 2, bei welcher der Träger (12) jeweils Schwenkelemente (28, 30) umfaßt, die von jeder Stirnwand (24, 26) vorstehen, um zu ermöglichen, daß der Träger schwenkbar am Rahmen angebracht wird.

4. Sicherheitsgurt-Aufrollvorrichtung, die folgendes umfaßt: einen Rahmen, eine drehbar am Rahmen angebrachte Spule, eine Spulenarretiervorrichtung zum Arretieren der Spule, um ein Drehen derselben zu verhindern, Betätigungsmittel zum Betätigen der Spulenarretiervorrichtung, die einen Träger (12) umfaßt, der eine Masse (14) und eine Sperrklinke (16) trägt, wobei die Masse (14) angeordnet wird, um sich von einer Anfangsposition zu einer Betätigungsposition zu bewegen, um die Sperrklinke (16) in einen Eingriff mit einem Klinkenrad (36) an der Spule zu bewegen, wodurch der Eingriff der Sperrklinke (16) mit dem Klinkenrad (36) die Spulenarretiervorrichtung betätigt, **dadurch gekennzeichnet, daß** die Spule eine wesentlich koaxial mit derselben angeordnete Nockenformation (48) mit einem kreisförmigen Nockenumfang hat, wobei der Träger (12) einen Nockenstößel (46) hat, wobei der Träger (12) als Reaktion auf eine Bewegung des Nockenstößels beweglich im Verhältnis zur Spule angeordnet wird.

5. Sicherheitsgurt-Aufrollvorrichtung nach Anspruch 4, bei welcher der Träger (12) schwenkbar am Rahmen angebracht wird, wenn diese Bewegung des Nockenstößels (46) veranlasst, daß der Träger schwenkt, um so ein selbsttätiges Einstellen des Kippspalts zu bewirken.

6. Sicherheitsgurt-Aufrollvorrichtung, die folgendes umfaßt: einen Rahmen, eine drehbar am Rahmen angebrachte Spule, eine Spulenarretiervorrichtung zum Arretieren der Spule, um ein Drehen derselben zu verhindern, Betätigungsmittel zum Betätigen der Spulenarretiervorrichtung, die einen Träger (12) umfaßt, der eine Masse (14) und eine Sperrklinke (16) trägt, wobei die Masse (14) angeordnet wird, um sich von einer Anfangsposition zu einer Betätigungsposition zu bewegen, um die Sperrklinke (16) in einen Eingriff mit einem Klinkenrad (36) an der Spule zu bewegen, wodurch der Eingriff der Sperrklinke (16) mit dem Klinkenrad (36) die Spulenarretiervorrichtung betätigt, **dadurch gekennzeichnet, daß** das Betätigungsmittel einen schwenkbar am Träger (12) angebrachten und zwischen der Masse (14) und der Sperrklinke (16) angeordneten Sperrklinkenbetätigungshebel (53) umfaßt, wobei die Sperrklinke eine Nockenfläche (52) einschließt, wodurch ein Bewegen des Sperrklinkenbetätigungshebels (53) längs der Nockenfläche die Entfernung zwischen der Sperrklinke (16) und dem Klinkenrad (36) einstellt.

7. Sicherheitsgurt-Aufrollvorrichtung nach Anspruch 6, bei der die Bewegung des Sperrklinkenbetätigungshebels (53) längs der Nockenfläche (52) mit Hilfe eines Bewegungsmechanismus' bewirkt wird, der einen Gelenkzapfen (84), der den Sperrklinkenbetätigungshebel (53) schwenkbar befestigt, und einen Gelenkstift (88) umfaßt, der parallel mit und versetzt zu der Achse desselben vom Gelenkzapfen (84) vorsteht, wodurch ein Drehen des Gelenkstifts (88) eine Bewegung des Sperrklinkenbetätigungshebels (53) längs der Nockenfläche (52) bewirkt.

## Revendications

1. Enrouleur de ceinture de sécurité comprenant un cadre, une bobine montée par rotation sur le cadre, un dispositif de verrouillage de la bobine pour verrouiller la bobine et empêcher sa rotation, un moyen d'actionnement pour actionner le dispositif de verrouillage de la bobine, comprenant un support (12) monté de sorte à pouvoir tourner autour d'un axe, le support supportant une masse (14) et un cliquet (16), la masse (14) étant destinée à se déplacer d'une position initiale vers une position d'actionnement pour entraîner l'engagement du cliquet (16) dans un rochet (36) sur la bobine, l'engagement du cliquet (16)dans le rochet (36) entraînant l'actionnement du dispositif de verrouillage de la bobine, **caractérisé en ce que** le cliquet (16) est décalé de l'axe, la rotation du support (12) autour de l'axe entraînant ainsi le déplacement du cliquet (16), de sorte à ajuster la distance entre le cliquet (16) et le rochet (36).

2. Enrouleur de ceinture de sécurité selon la revendication 1, dans lequel le support (12) comprend de préférence une base (18) comportant un évidement (20) et deux parois d'extrémité (24, 26), remontant à partir des bords opposés de la base, la masse (14) étant reçue dans l'évidement (20) et le cliquet (16) étant agencé au-dessus de la masse (14), avec un montage par pivotement sur une partie supérieure d'une paroi d'extrémité (24, 26).

3. Enrouleur de ceinture de sécurité selon la revendication 2, dans lequel le support (12) englobe des éléments de pivotement respectifs (28, 30), s'étendant à partir de chaque paroi d'extrémité (24, 26), pour permettre le montage par pivotement du support sur le cadre.

4. Enrouleur de ceinture de sécurité comprenant un cadre, une bobine montée par rotation sur le cadre, un dispositif de verrouillage de la bobine pour verrouiller la bobine et empêcher sa rotation, un moyen d'actionnement pour actionner le dispositif de verrouillage de la bobine, comprenant un support (12) supportant une masse (14) et un cliquet (16), la masse étant destinée à se déplacer d'une position initiale vers une position d'actionnement pour entraîner l'engagement du cliquet (16) dans un rochet (36) sur la bobine, l'engagement du cliquet dans le rochet entraînant l'actionnement du dispositif de verrouillage de la bobine, **caractérisé en ce que** la bobine comporte une structure à came (48) avec une périphérie à came circulaire agencée de manière pratiquement coaxiale, le support (12) comportant un galet de came (46), le support (12) étant monté de manière mobile par rapport à la bobine, en réponse à un déplacement du galet de came.

5. Enrouleur de ceinture de sécurité selon la revendication 4, dans lequel le support (12) est monté par pivotement sur le cadre, le déplacement du galet de came (46) entraînant le pivotement du support de sorte à assurer un ajustement automatique de l'espace de pointe.

6. Enrouleur de ceinture de sécurité comprenant un cadre, une bobine montée par rotation sur le cadre, un dispositif de verrouillage de la bobine pour verrouiller la bobine et empêcher sa rotation, un moyen d'actionnement pour actionner le dispositif de verrouillage de la bobine, comprenant un support (12) supportant une masse(14) et un cliquet (16), la masse (14) étant destinée à se déplacer d'une position initiale vers une position d'actionnement pour entraîner l'engagement du cliquet (16) dans un rochet (36) sur la bobine, l'engagement du cliquet (16) dans le rochet (36) entraînant l'actionnement du dispositif de verrouillage de la bobine, **caractérisé en ce que** le moyen d'actionnement comprend un levier d'actionnement du cliquet (53) monté par pivotement sur le support (12) et agencé entre la masse (14) et le cliquet (16), le cliquet englobant une surface à came (52), le déplacement du levier d'actionnement du cliquet (53) le long de la surface à came permettant d'ajuster la distance entre le cliquet (16) et le rochet (36).

7. Enrouleur de ceinture de sécurité selon la revendication 6, dans lequel le déplacement du levier d'actionnement du cliquet (53) le long de la surface à came (52) est assuré par un mécanisme de déplacement comprenant un axe de pivotement (84) assurant le montage par pivotement du levier d'actionnement du cliquet (53) et une cheville de pivotement (88) s'étendant à partir de l'axe de pivotement (84), parallèle à l'axe correspondant et décalée par rapport à celui-ci, et reçue dans le support, la rotation de la cheville de pivotement (88) entraînant ainsi le déplacement du levier d'actionnement du cliquet (53) le long de la surface à came (52).
